# DEMANDE DE BREVET EUROPEEN

(11) **EP 1 385 030 A1**
(43) Date de publication de la demande: **28.01.2004**
(21) Numéro de dépôt: 03102078.7
(22) Date de dépôt: 10.07.2003
(51) Int. Cl.: G02B 6/28

(54) **Coupleur optique**

(30) Priorité: 17.07.2002 FR 0209087
(71) Demandeur: SOURIAU, 78000 Versailles Cedex (FR)
(72) Inventeur: Pignot, Patrick, 72000, Le Mans (FR); Salmon, Xavier, 72230, Ruaudin (FR)
(74) Mandataire: Schmit, Christian Norbert Marie

(57) **Abrégé**

Coupleur optique (1) comportant deux fibres optiques (2, 3), chacune des fibres optiques reliant à une première extrémité (9, 10) un émetteur (4) et ensuite chacune de ces fibres étant reliée indépendamment à deux récepteurs (6, 8) indépendants. Au niveau de l'émetteur 4, les fibres sont dénudées pour être insérées dans une même férule (15) qui peut être présentée en face du faisceau optique émis par l'émetteur. La zone intermédiaire dénudée entre la férule et la portion de câble non dénudé, est protégée par une première gaine (21) à l'intérieur de laquelle les fibres optiques nues sont flottantes et par une deuxième gaine de protection.

## Description

La présente invention a pour objet un coupleur optique. Un tel coupleur optique permet de transmettre un signal optique entre d'une part un premier dispositif et d'autre part au moins deux deuxièmes dispositifs. Par exemple, un coupleur optique permet de relier un émetteur d'un signal optique à deux récepteurs de ce signal optique. Elle trouve plus particulièrement son utilisation dans le domaine du contrôle des dispositifs de commande, notamment ceux disposés sur des locomotives. De tels coupleurs permettent ainsi de garantir une redondance des systèmes de surveillance, voire leur multiplication. Ce coupleur met en oeuvre deux fibres optiques et présente l'avantage de transmettre le signal avec quasiment aucune perte dans le signal et sans perturbations puisque non susceptible aux perturbations électromagnétiques. En effet, avec un coupleur selon l'invention, on obtient des pertes entre signal émis et signal reçu inférieures à trois décibels.

Dans l'état de la technique, on connaît un coupleur optique pour relier par exemple un émetteur à deux récepteurs, ce coupleur comportant du côté de l'émetteur une première fibre optique présentant une première extrémité en vis à vis d'une source optique. Une deuxième extrémité de cette première fibre optique ne pouvant être présentée directement en vis-à-vis de deux récepteurs différents, le coupleur permet de relier la première fibre à deux autres fibres, chacune disposée en vis-à-vis d'un récepteur différent pour leur transmettre respectivement le signal émis.

Généralement, un coupleur est centralisé en effectuant la fusion des deux fibres entre elles à fins que la lumière puisse passer de l'émetteur vers les deux récepteurs, ou bien il peut être réalisé en juxtaposant les deux fibres "récepteur" qui seront ensuite alignées et positionnées en vis à vis de la fibre "émetteur". Pour que le signal véhiculé dans la première fibre optique "émetteur" soit correctement transmis aux deux fibres optiques "récepteur", il est nécessaire que chacune de ces fibres optiques "récepteur" soient présentées en face du faisceau émis par la fibre "émetteur". A cet effet, une fibre optique étant généralement entourée d'une gaine et d'un câble, on dénude totalement de leur gaine les extrémités des deux fibres optiques "émetteur" pour pouvoir les coller au plus près. Ainsi, si le faisceau fourni par le signal optique véhiculé par la première fibre optique fait un certain diamètre, on s'arrange pour que les deux deuxièmes fibres optiques soient disposées de telle sorte qu'elles se partagent équitablement la position en vis à vis du faisceau.

Généralement toutes les fibres optiques du coupleur présentent des mêmes diamètres extérieurs avec et ou sans gaine, et un même diamètre intérieur. Lorsque deux fibres sont dénudées , et accolées, alors les deux centres sont distants l'un de l'autre d'une distance égale à deux fois le rayon de la fibre.

Pour diminuer les pertes entre la première fibre optique et les deux deuxièmes fibres optiques, on connaît des solutions permettant d'élargir le faisceau pour que celui-ci permette de couvrir l'intégralité des surfaces accolées des extrémités dénudées des deux deuxièmes fibres optiques. Dans ce cas, il est nécessaire de disposer une lentille entre la première fibre optique et les deux deuxièmes fibres optiques. Ce montage est difficile à réaliser, onéreux, et par ailleurs ne diminue pas complètement les pertes de signal.

L'invention a pour objet de résoudre le problème posé. En effet, un coupleur optique selon l'invention limite très nettement les pertes de transmission du signal. En effet le coupleur optique prévu dans l'invention est réalisé de telle sorte que les deux fibres optiques qui sont chacune reliées à un récepteur, selon l'exemple décrit ci-dessus, comportent chacune une extrémité qui est disposée directement en vis à vis du faisceau émis par le dispositif émetteur. Réciproquement, l'invention permet également une transmission sans perte de signal même si chacune des deux fibres est reliée respectivement à un émetteur et que chacune de ces deux fibres est présentée en vis à vis d'un récepteur commun.

En effet avec un coupleur selon l'invention un émetteur unique est relié à deux récepteurs différents par l'intermédiaire de deux fibres optiques distinctes recevant chacune le même signal émis. La particularité selon l'invention est que les deux fibres optiques sont accolées, du côté où le premier dispositif est unique, ce premier dispositif émettant un signal à transmettre vers la multiplicité d'autres dispositifs, ou ce premier dispositif recevant des signaux provenant d'une multiplicité d'autres dispositifs.

Dans des modes de réalisation préférés la manière d'accoler les deux fibres optiques permet d'obtenir une transmission sans perte et d'autre part de rapprocher au maximum les deux fibres optiques de manière à les présenter dans un seul et même connecteur. En effet les deux fibres optiques sont partiellement dénudées et insérées dans une même férule.

L'invention a pour objet un coupleur optique pour transmettre un signal optique entre un premier dispositif et au moins deux deuxièmes dispositifs, le coupleur comportant au moins deux fibres optiques, chaque deuxième dispositif étant respectivement présenté en face d'une première extrémité d'une fibre, les au moins deux fibres présentant des deuxièmes extrémités accolées en vis-à-vis du premier dispositif dans une férule, caractérisé en ce qu'une portion de fibre dénudée située entre la férule et la portion de câble non dénudée est entourée d'une première gaine thermorétractable.

Réciproquement, l'invention permet aussi de transmettre un signal émis par deux émetteurs différents vers un récepteur unique.

De manière équivalente, l'invention a pour objet un coupleur optique pour transmettre un signal optique entre un premier dispositif et au moins deux deuxièmes dispositifs.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un schéma de principe d'un coupleur ;
- Figure 2a : un schéma de principe d'un coupleur selon l'invention au cours d'une première étape de réalisation ;
- Figure 2b :un schéma de principe d'un coupleur selon l'invention au cours d'une deuxième étape de réalisation ;
- Figure 2c :un schéma de principe d'un coupleur selon l'invention au cours d'une troisième étape de réalisation ; et
- Figure 2d :un schéma de principe d'un coupleur selon l'invention au cours d'une quatrième étape de réalisation.

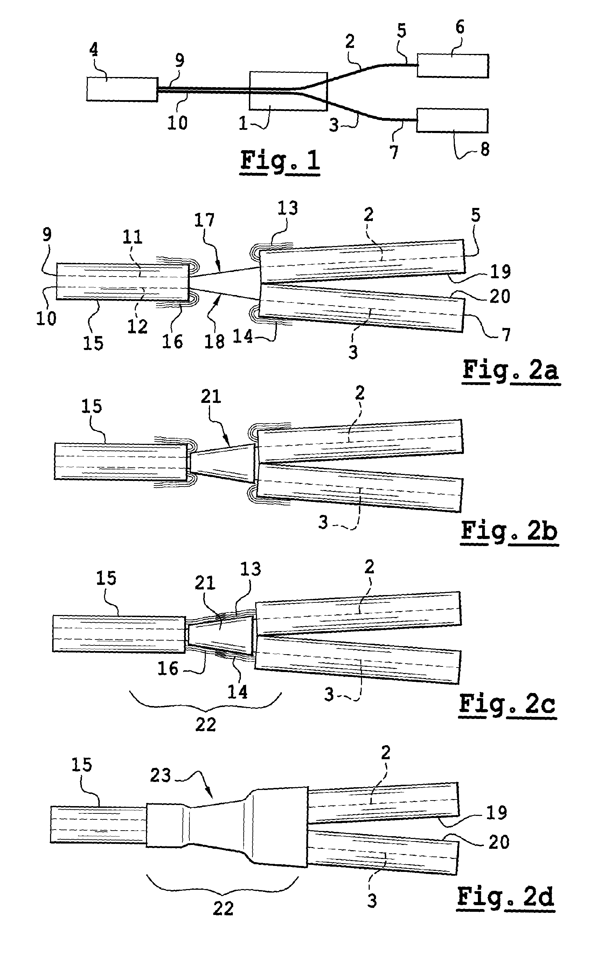

La figure 1 montre un coupleur optique 1. Ce coupleur optique 1 comporte deux fibres optiques au moins. Il comporte par exemple une première fibre optique 2 et une deuxième fibre optique 3. Le coupleur optique est relié à un premier dispositif 4. Les deux fibres optiques 2 et 3 sont donc reliées à ce premier dispositif 4. Par ailleurs, une première extrémité 5 de la première fibre optique 2 est connectée à un premier deuxième dispositif 6. De même, une première extrémité 7, telle que 5, est connectée à un deuxième deuxième dispositif 8 tel que 6. Par exemple, le deuxième deuxième dispositif 8 est identique au premier deuxième dispositif 6 de manière à dédoubler parfaitement et à sécuriser la transmission du signal optique véhiculé dans le coupleur 1.

Dans un premier mode de réalisation, le premier dispositif 4 est un dispositif comportant une source émettrice d'un signal optique. Selon ce mode de réalisation, les deuxièmes extrémités respectivement 9 et 10 des première et deuxième fibres optiques 2 et respectivement 3, sont présentées en vis à vis d'une source lumineuse de l'émetteur 4. Dans ce cas, les deuxièmes dispositifs 6 et 8 sont des dispositifs comportant des récepteurs de ce signal optique. Par exemple les deuxièmes dispositifs 6 et 8 sont des dispositifs optoélectroniques permettant de transformer le signal optique reçu en un signal électrique utilisable par un système de contrôle, par exemple.

Dans une variante, selon un deuxième mode particulier de réalisation de l'invention, le premier dispositif 4 peut être un récepteur et dans ce cas, il reçoit par les fibres optiques 2 et 3 les signaux optiques émis par les émetteurs respectivement 6 et 8. Dans cette deuxième variante, la réalisation du coupleur 1 et de ses fibres optiques ne changeant en rien. Ce deuxième mode de réalisation se déduira du premier mode de réalisation décrit plus en détail ci-après.

En effet, pour réaliser un coupleur optique selon l'invention, selon une première étape de fabrication figure 2a, on dénude la première fibre 2 et la deuxième fibre 3 de manière à présenter pour chacune d'entre elle une extrémité avant ne présentant que la fibre optique nue entourée de sa seule enveloppe protectrice fine. Les fibres optiques 2 et 3 sont en effet réalisées de telle sorte qu'elles comportent chacune une fibre optique nue entourée de sa gaine protectrice et ensuite entourée de mèches 13 et 14 formant un treillis, un maillage, autour de la fibre optique nue. L'ensemble étant entouré d'une première gaine formant ainsi un câble.

La première fibre optique 2 présente donc une extrémité dénudée 11 formée uniquement par la fibre optique nue. De même la deuxième fibre optique 3 présente une deuxième extrémité nue 12. Les extrémités nues 11 et 12 sont préférentiellement d'une même longueur. Par exemple elles ont une longueur de l'ordre de 10 à 20 cm. Les mèches 13 et respectivement 14 des fibres 2 et respectivement 3 sont écartées des extrémités 11 et 12. Au cours de cette première étape, les extrémités de fibres optiques nues 11 et 12 sont insérées dans une férule 15. Cette férule 15 présente un diamètre intérieur juste prévu pour y recevoir les deux fibres optiques nues 11 et 12. Les deux fibres optiques 11 et 12 y sont accolées. Elles peuvent même être collées dans la férule.

Dans un mode de réalisation présentant plus de deux fibres optiques à relier à un même premier dispositif 4, le diamètre interne de la férule 15 est prévu de telle sorte qu'il puisse recevoir autant de fibres optiques qu'il y a à y insérer et à y accoler.

La férule 15 présente éventuellement également des mèches 16 sur son pourtour extérieur formant un treillis identique aux mèches 13 et 14. Ces mèches 16 sont écartées de la zone de connexion pour ne pas gêner l'introduction des fibres optiques nues 11 et 12 à l'intérieur de la férule 15. Elles y sont insérées de telle sorte que leur extrémité soit présentée dans un plan formant une face de connexion de la férule 15.

Le montage de ces fibres optiques nues dans la férule 15 se fait de manière relativement souple. Il existe donc pour chacune des fibres optiques nues une portion de fibre optique nue qui n'est pas insérée dans la férule 15. Par exemple la première fibre optique nue 11 présente une portion 17, et respectivement la deuxième fibre optique nue 12 présente également une deuxième portion 18 qui ne sont plus entourées de leur gaine respective et qui sont disposées entre d'une part la férule 15 et d'autre part les portions des fibres optiques qui sont elles encore munies de leur gaine protectrice.

Figure 2b, au cours d'une deuxième étape, on entoure ces portions 17 et 18 de fibres optiques nues d'une première gaine 21. Les portions 17 et 18 restent néanmoins coulissantes à l'intérieur de cette première gaine 21. Cette gaine 21 est de préférence thermo-rétractable et se rétracte sous l'effet de la chaleur sur ces deux portions 17 et 18. Ceci permet d'augmenter la maniabilité de telles fibres en autorisant de les courber légèrement.

Figure 2c, les mèches 13, 14 et 16 sont rabattues sur tout le pourtour de cette première gaine 21 et sont entremêlées pour former à nouveau un treillis tout autour de cette première gaine 21.

Selon la figure 2d, on entoure toute la zone de connexion 22 d'une deuxième gaine protectrice 23. Cette deuxième gaine protectrice 23 est de préférence collée. Elle recouvre au moins une partie de la férule 15, au moins la partie d'où dépassent les portions de fibres optiques nues 17 et 18. Cette deuxième gaine 23 recouvre également le treillis formé par les mèches 13, 14 et 16 et donc également recouvre la première gaine thermo-rétractable 21. Enfin, cette deuxième gaine 23 recouvre également des portions des câbles 19 et 20 des fibres 2 et 3 au niveau desquels sortent les fibres optiques nues 17 et 18. Cette deuxième gaine 23 est collée au moins sur la première gaine 21. Dans l'exemple présenté, pour connecter le premier dispositif à deux deuxièmes dispositifs, la deuxième gaine 23 forme un conduit de protection en forme de Y pour lequel la tige du Y est formée par la férule 15.

Pour le premier mode de réalisation, pour qu'il n'y ait pas de perte de signal depuis l'émetteur 4, il est absolument nécessaire que chaque extrémité 9 et 10 des fibres respectivement 2 et 3 reçoivent chacune l'intégralité du signal émis par la source de l'émetteur 4. A cet effet il est nécessaire que le faisceau émis par l'émetteur 4 soit suffisamment large pour pouvoir couvrir la surface cumulée présentée par les deux extrémités 9 et 10 lorsqu'elles sont accolées et juxtaposées. Dans ce cas, la source de l'émetteur 4 est par exemple une diode du type LED, telle que sa surface de sensibilité, ou diamètre de faisceau émis, est suffisamment large pour couvrir la totalité des surfaces des fibres optiques présentées en vis-à-vis.

Dans le cas où le faisceau émis par l'émetteur 4 présente un trop faible diamètre, on utilise alors une lentille interposée entre le faisceau émis par l'émetteur 4 et d'autre part les extrémités 9 et 10 des fibres optiques. Dans ce cas, la lentille est facile d'accès et peut facilement être remplacée au besoin.

Dans une variante, on peut même prévoir dans le cas où le faisceau est suffisamment large de ne même pas dénuder les fibres optiques 2 et 3 lorsqu'on les insère dans la férule 15.

## Revendications

1. Coupleur optique (1) pour transmettre un signal optique entre un premier dispositif (4) et au moins deux deuxièmes dispositifs (6, 8), le coupleur comportant au moins deux fibres optiques (2, 3), chaque deuxième dispositif étant respectivement présenté en face d'une première extrémité (5, 7) d'une fibre, **caractérisé en ce que** les deux fibres présentent des deuxièmes extrémités (9, 10) accolées en vis-à-vis du premier dispositif.

2. Coupleur selon la revendication 1 **caractérisé en ce que** les deuxièmes extrémités sont retenues dans une férule (15).

3. Coupleur selon la revendication 2 **caractérisé en ce que** les deuxièmes extrémités sont dénudées, juxtaposées et collées dans la férule.

4. Coupleur selon l'une des revendications 2 à 3 **caractérisé en ce qu'**une portion de fibre dénudée située entre la férule et la portion de câble non dénudée est entourée d'un première gaine thermorétractable (21).

5. Coupleur selon la revendication 4 **caractérisé en ce que** la férule, le câble de protection et la première gaine sont entourés par une deuxième gaine de protection (23).

6. Coupleur selon la revendication 5 **caractérisé en ce que** la deuxième gaine est collée sur au moins la première gaine.

7. Coupleur selon l'une des revendications 4 à 5 **caractérisé en ce que** la deuxième gaine forme un conduit en Y autour des fibres optiques.

8. Coupleur selon l'une des revendications 1 à 7 **caractérisé en ce que** le premier dispositif a une surface de sensibilité résultante couvrant la surface cumulée des deux extrémités juxtaposées.

9. Coupleur selon l'une des revendications 1 à 8 **caractérisé en ce que** le premier dispositif est un émetteur, et **en ce que** les deuxièmes dispositifs sont des récepteurs.
